(19) **Europäisches Patentamt / European Patent Office / Office européen des brevets**

(11) **EP 1 190 208 B1**

(12) **FASCICULE DE BREVET EUROPEEN**

(45) Date de publication et mention de la délivrance du brevet:
**15.06.2011 Bulletin 2011/24**

(51) Int Cl.:
***G06T 7/00*** (2006.01)

(21) Numéro de dépôt: **01929709.2**

(86) Numéro de dépôt international:
**PCT/FR2001/001274**

(22) Date de dépôt: **26.04.2001**

(87) Numéro de publication internationale:
**WO 2001/081858 (01.11.2001 Gazette 2001/44)**

(54) **PROCEDE DE MESURAGE D'UN OBJET TRIDIMENSIONNEL, OU D'UN ENSEMBLE D'OBJETS**

MESSVERFAHREN FÜR 3D-OBJEKT ODER OBJEKTGRUPPE

METHOD FOR MEASURING A THREE-DIMENSIONAL OBJECT, OR ASSEMBLY OF OBJECTS

(84) Etats contractants désignés:
**DE ES GB IT**

(30) Priorité: **27.04.2000 FR 0005392**

(43) Date de publication de la demande:
**27.03.2002 Bulletin 2002/13**

(73) Titulaires:
• **Commissariat à l'Énergie Atomique et aux Énergies Alternatives**
**75015 Paris (FR)**
• **AREVA NC**
**75009 Paris (FR)**

(72) Inventeurs:
• **Viala, Marc**
**78280 GUYANCOURT (FR)**
• **Naudet, Sylvie**
**91940 LES ULIS (FR)**
• **Sayd, Patrick**
**91120 PALAISEAU (FR)**
• **Cohen, Laurent**
**75013 PARIS (FR)**
• **Dumont, Arnauld**
**78320 MESNIL SAINT DENIS (FR)**
• **Jallon, Frédéric**
**78125 POIGNY LA FORET (FR)**

(74) Mandataire: **Ilgart, Jean-Christophe et al**
**BREVALEX**
**95 rue d'Amsterdam**
**75378 Paris Cedex 8 (FR)**

(56) Documents cités:
**DE-A- 4 325 269      GB-A- 2 272 515**
**US-A- 5 537 494**

**Description**

L'invention est un procédé qui permet de déterminer la géométrie, la position et l'orientation d'un ou plusieurs objets dans un environnement. L'objectif est de fournir des informations dimensionnelles ou de mesurage sur des primitives tridimensionnelles (points, droites, cercles, cylindres, ...) représentant ces objets en exploitant une projection sur des images acquises par un ou plusieurs capteurs. Ces données dimensionnelles sont exploitées pour le contrôle dimensionnel d'objets manufacturés (prototype ou série), la mesure de déformation de structure, la modélisation d'environnements industriels.

Il existe plusieurs grandes familles de procédés pour accomplir ce genre de mesurages. Certains impliquent une mesure directe des objets de l'environnement par la pointe d'un palpeur, mais cette méthode n'est pas toujours possible à appliquer et devient très longue dès que l'environnement est volumineux, encombré ou de forme compliquée ; elle est impensable quand il a les dimensions d'un local entier. D'autres méthodes recourent à la télémétrie, c'est-à-dire qu'on mesure les distances à différents points de l'environnement sans contact matériel ; un laser est successivement dirigé vers ces points et la mesure porte sur le temps de vol ou le déphasage de l'onde. Un miroir ou un système mécanique est utilisé pour diriger incessamment le rayon du laser vers d'autres points, ce qui permet des mesurages rapides de l'environnement, mais on observe que cette méthode n'est pas toujours très précise (bien que la résolution ne soit limitée que par le système de balayage du laser) et s'accompagne d'erreurs quand le faisceau touche des objets réfléchissants, et il faut aussi s'assurer de la stabilité du système mécanique pendant le balayage et veiller à la sécurité des personnes susceptibles de se trouver dans le volume de mesure.

D'autres méthodes sont des méthodes optiques dans lesquelles une caméra est déplacée devant l'environnement à mesurer et prend une succession d'images. Les détails de l'environnement sont identifiés sur les différentes images et leur position est calculée par des triangulations selon leur position sur les images respectives et les positions connues à l'avance de la caméra, en fonction des paramètres de prise d'image de celle-ci. Parfois, on identifie un réseau de points de l'environnement, qui ont été illuminés par un laser ou un projecteur d'un faisceau de rayons ; une lumière additionnelle peut être ajoutée pour mieux éclairer les alentours du réseau de points et le faire ressortir du reste de l'environnement. L'utilisation d'un moyen d'illumination rappelle les procédés de télémétrie et entraîne des inconvénients analogues d'imprécision et d'insécurité, qui ne compensent pas toujours la rapidité et la facilité de l'identification et des calculs qu'on peut souvent atteindre.

Dans d'autres méthodes, les points à mesurer sont des sources lumineuses, des marques réfléchissantes ou colorées posées auparavant dans l'environnement. Ces méthodes donnent de bons résultats si les marques et leur position sont convenablement choisies, mais elles ne sont pas applicables dans tous les cas et notamment pour des environnements compliqués et de grande taille : elles semblent surtout intéressantes pour suivre la position d'un objet déterminé et mobile dans l'environnement plutôt que pour mesurer l'environnement lui-même.

Enfin, d'autres procédés optiques sont fondés sur l'absence de marques dans l'environnement et sur le mesurage de certains points d'intérêt des images. Les points d'intérêt sont choisis automatiquement ou par l'opérateur dans le cas de procédés interactifs. Ces procédés ont l'avantage d'être universels ou applicables théoriquement à n'importe quel environnement, mais il n'est pas toujours facile de disposer de points d'intérêt suffisamment nombreux, et qui soient communs à toutes les images ; l'étape d'appariement des points homologues sur des images différentes peut être délicate ; de plus, une description d'un environnement par des points même nombreux est peu évocatrice.

L'invention constitue un procédé faisant partie des méthodes purement optiques et plus précisément de celles qui comportent une analyse d'image. Ce nouveau procédé peut comporter des triangulations, mais il se distingue fondamentalement des procédés précédents en ce qu'on s'intéresse ici à distinguer des détails de l'environnement plutôt qu'à dresser une cartographie de ses points. Il est en effet souvent plus facile et fructueux de discerner un élément précis de l'environnement et de le distinguer du reste, que de disposer d'une connaissance complète mais indistincte de cet environnement. Dans le cas, fréquent en pratique, de mesurage de locaux industriels, cette considération sera d'autant plus importante que les éléments et obstacles sont souvent nombreux mais de forme simple, de sorte qu'ils se superposent et créent un relief très compliqué, mais que l'exploitation de la représentation faite est beaucoup plus facile quand on a distingué ces éléments et qu'on les a caractérisés par quelques paramètres de position et de forme.

Les avantages offerts par le procédé sont multiples : il n'est point besoin de garnir l'environnement de marques spécifiques ; une portion beaucoup plus importante de l'information des images est exploitée que si on s'occupe de points d'intérêt, ce qui doit donner une précision meilleure de la représentation qu'on obtient ; le procédé est efficace même avec des surfaces variées, diffusantes ou réfléchissantes ; il est applicable à des volumes variés, éventuellement très grands ; la durée d'acquisition est extrêmement rapide, de quelques dizaines de millisecondes ; une automatisation complète du procédé est possible ; la représentation peut être parachevée ultérieurement en y ajoutant de nouvelles entités, qui avaient été négligées auparavant, ou la corrigeant par des mises à jour ou d'autres opérations ; et comme elle fournit immédiatement un modèle concret de l'environnement, elle peut être exploitée immédiatement, alors qu'une cartographie de points nécessite d'être interprétée.

Le procédé est fondé sur un système composé de cinq modules principaux dont voici la liste :

- un module de traitement d'images qui assure la localisation précise des contours naturels des objets à reconstruire ;
- un module de reconstruction et localisation qui détermine les paramètres géométriques des objets et la situation du système de capture d'images ;
- un module d'identification qui réalise la recherche automatique des contours naturels des objets déjà reconstruits ;
- un module d'appariement de points d'intérêt, pour aider à replacer ces contours d'objets reconstruits sur une nouvelle image ;
- et un module de reconstruction en bloc, faisant un calcul d'ensemble (récapitulatif) d'après toutes les informations disponibles et améliorant grandement la précision.

La mise en oeuvre de ce procédé nécessite une ou plusieurs vidéo-caméras étalonnées au préalable (quoique l'étalonnage ne soit pas nécessaire si on se limite à des primitives de type ponctuel), afin de disposer de la relation entre tout point de l'image et la position du rayon lumineux associé. Les étalonnages préalables ont déjà été décrits par différents auteurs ; on peut citer l'article de Viala, Chevillot, Guérin et Lavest : « Mise en oeuvre d'un procédé d'étalonnage précis de caméra CCD » présenté au 11ème congrès Reconnaissance des formes et Intelligence Artificielle (Clermont-Ferrand, 20 au 22 janvier 1998). Quand plusieurs caméras sont employées, on parle d'un système stéréoscopique apte à donner automatiquement un modèle tridimensionnel de l'environnement par une recherche de points homologues sur les images et des triangulations. Si une seule caméra est employée, le même résultat peut être obtenu par des images successives en déplaçant la caméra d'une quantité déterminée. Cette quantité peut également être déterminée, a posteriori, par calcul si on dispose dans l'environnement d'un mètre étalon.

Pour résumer, l'invention est relative à un procédé de mesurage d'objets tridimensionnels d'un environnement tridimensionnel, conforme à la revendication 1. Le document, IEEE Transactions on Pattern Analysis and Machine Intelligence, Volume 21, Issue 9 (September 1999) "Part-Based 3D Descriptions of Complex Objects from a Single Image", Pages 835 - 848, décrit un procédé pour décrire des objets complexes dans une scène a partir d'une image en décomposant des objets 3D en parties volumiques, détectant les discontinuités de l'aspect de l'image et en associant les discontinuités a des contours géométriques. A noter que le document US-5 537 494 décrit un procédé de codage et de compression d'image où l'intensité lumineuse est modélisée par des polynômes le long de lignes parallèles, les polynômes étant définis sur des segments s'arrêtant aux intersections des lignes avec des contours des objets sur l'image. Des corrélations entre images sont possibles en recherchant des segments identiques. Le caractère plat ou courbe des surfaces des objets sur l'image est supposé selon que les polynômes sont du premier degré ou d'un degré supérieur.

La représentation de l'environnement est complétée à chaque nouvelle image prise ou par des informations supplémentaires. Le procédé peut ainsi comprendre des estimations initiales de position des objets ou de la caméra à partir d'informations spécifiées manuellement ou à travers un fichier informatique de description.

D'une manière générale, le procédé peut être accompli avec bien des variantes, et de la souplesse selon la situation rencontrée. Une possibilité offerte par certaines des meilleures réalisations est une correction de position des objets en estimant les positions de projection des objets sur les images d'après les position respectives de la caméra quand les images furent prises, et en ajustant les positions de projection estimées d'après les positions de projection mesurées sur les images.

Cette correction est généralement faite au cours d'un calcul final récapitulatif où l'erreur totale de la représentation est estimée puis minimisée ; on peut aussi rectifier l'estimation des paramètre des caméras.

On passe maintenant à la description d'une réalisation concrète de l'invention au moyen des figures suivantes :

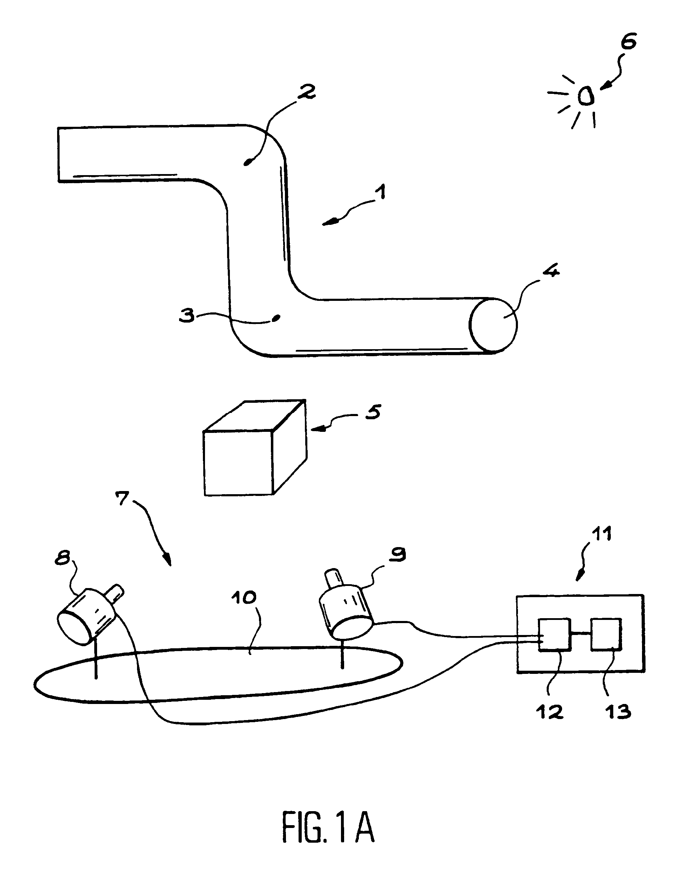

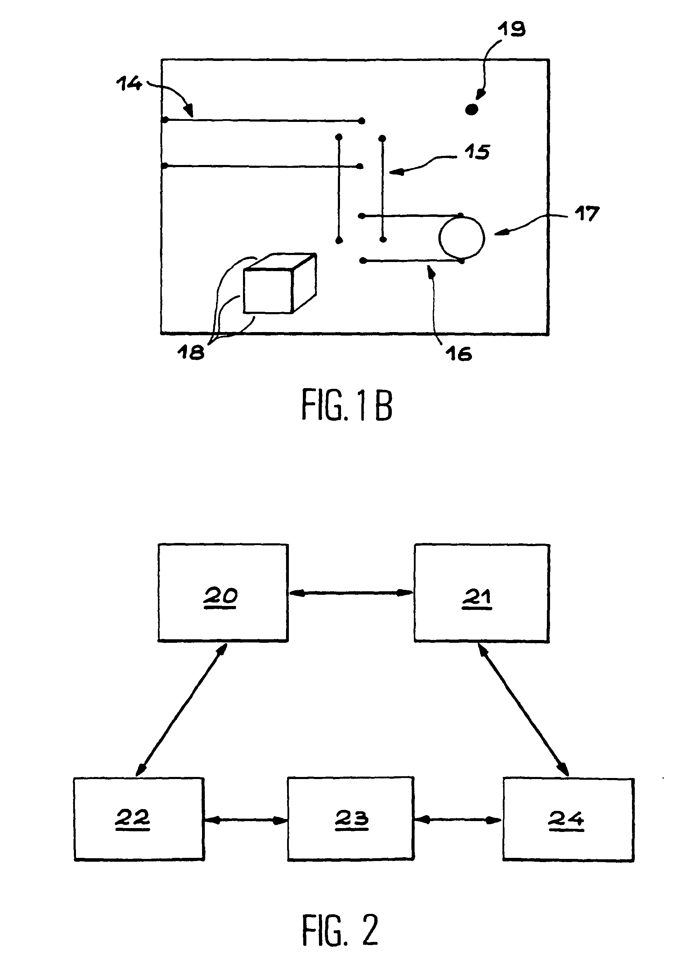

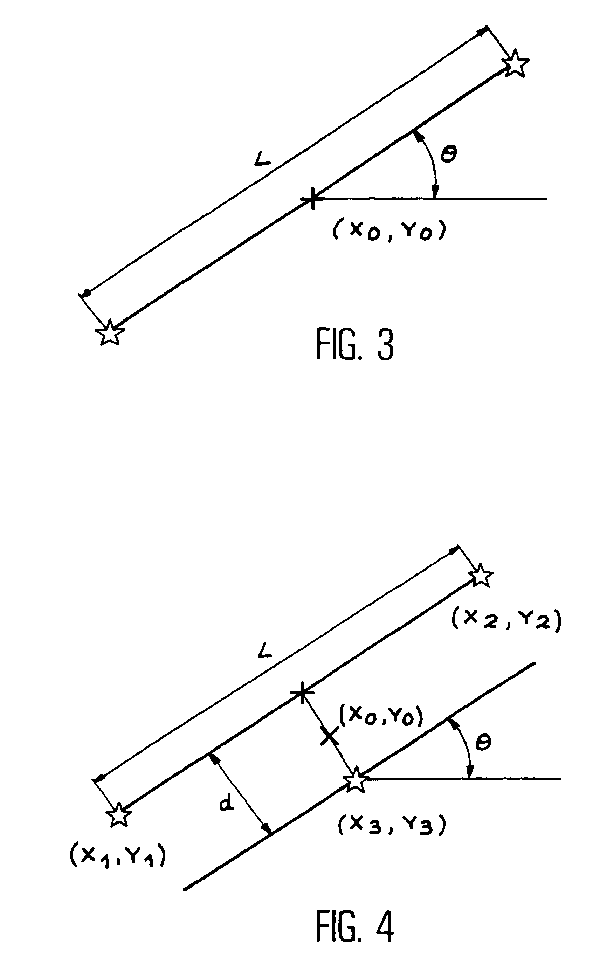

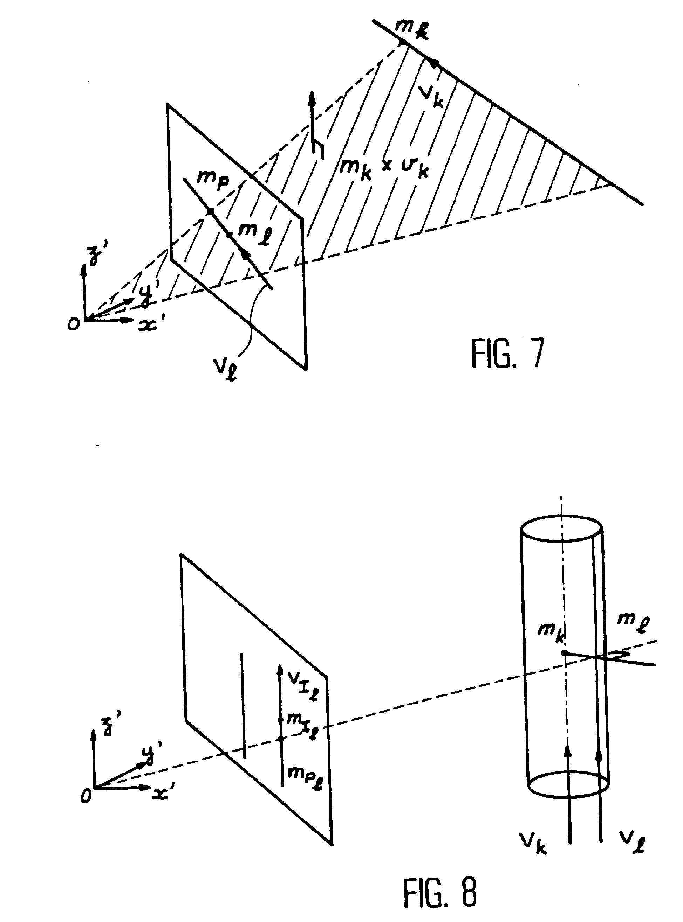

■ la figure 1A est un schéma d'un système d'examen dans un environnement typique ;
■ la figure 1B illustre comment l'environnement est perçu sur une image ;
■ la figure 2 schématise les modules de traitement du système d'examen ;
■ les figures 3, 4, 5 et 6 illustrent des modélisations de contours ;
■ et les figures 7 et 8 explicitent certaines notations utilisées dans la description.

Les modules énumérés ci-dessus portent les références 20 à 24 sur la figure 2 ; ils seront maintenant décrits successivement d'après l'exemple de la figure 1A, où l'environnement à reconnaître comprend un tuyau 1 doublement coudé en 2 et 3 et finissant sur une ouverture 4, une caisse 5 et une lampe 6. L'appareil de visualisation, appelé capteur 7, comprend deux vidéo-caméras 8 et 9 montées rigidement (quoique de façon réglable si nécessaire) sur un support commun 10 et reliées à un système d'exploitation 11 qui comprend en particulier une mémoire 12 où les images des caméras 8 et 9 sont conservées et une unité de traitement 13. Le procédé conforme à l'invention consiste à exploiter les images les unes après les autres en créant une représentation de l'environnement qu'on complète et précise en exploitant chaque nouvelle image. Ce travail est pour l'essentiel automatique, quoiqu'un opérateur doive encore, en pratique, appliquer son jugement pour compléter ou corriger la représentation dans certaines circonstances.

Nous entendons par représentation de l'environnement la mesure de caractéristiques géométriques ou dimensionnelles d'un ou plusieurs objets, la mesure de caractéristiques géométriques ou dimensionnelles d'éléments ou d'objets constituant une scène ou un environnement. Ce terme se rapportera également à la mesure de la position et de l'orientation d'un ou plusieurs objets.

Une image de caméra consiste en un réseau de points ayant des niveaux de gris différents, qui sont convertis en valeurs numériques pour la conservation dans la mémoire 12. La figure 1B montre que les contours du tuyau 1, de son ouverture 4, de la caisse 5 et de la lampe 6 peuvent être représentés respectivement par trois paires de segments (appelés ici limbes) parallèles ou sensiblement 14, 15 et 16, une ellipse 17, neuf segments de droite 18, et un point 19. En pratique, ces contours séparent des portions de teintes différentes sur l'image et sont donc des discontinuités, ce qu'on exploite pour les mesurer ; c'est la tâche du module de localisation 20.

La localisation des contours naturels sur une image s'appuie sur des modèles dits déformables ou contours actifs (cf. l'article de Kass, Witkin et Terzopoulos : « Snake : Active contour models » dans International Journal of Computer Vision, 1(4), p.321 à 331, janvier 1988 et la thèse de Bascle à l'université de Nice-Sophia Antipolis (janvier 1994) « Contributions et applications des modèles déformables en vision par ordinateur »). Ils consistent à faire évoluer numériquement à partir d'une position initiale un modèle déformable de contour tout en calculant son énergie après chaque déformation. Cette énergie comporte traditionnellement deux termes dont le premier exprime la régularité géométrique du modèle et rend compte de propriétés physiques éventuelles et le second rend compte de l'adéquation entre le modèle et l'image expérimentale obtenue. Concrètement, ce traitement a pour but de régulariser le modèle en réduisant ses irrégularités locales, généralement imputables au bruit, sans trop s'écarter des informations de l'image ; mais il ne fonctionne bien que sur des images peu complexes, ce qui n'est pas le cas ici. De plus, on propose ici une amélioration en décrivant certains éléments de l'image par des paramètres géométriques globaux. On pourra donc dire que les modèles de l'environnement qu'on obtiendra seront à la fois déformables et paramétriques.

Les contours auxquels on s'intéresse ici ont des formes simples et appartiennent à quelques types privilégiés qu'on rencontre très fréquemment dans la réalité : ce sont, comme on l'illustre à la figure 1B, avant tout le point, la droite, la double droite et l'ellipse. Un point sera modélisé par ses coordonnées cartésiennes x et y sur l'image. Comme les images sont finies, les droites seront modélisées par des segments et leurs paramètres sur l'image seront au nombre de quatre : les coordonnées $x_0$ et $y_0$ du milieu du segment, la longueur L du segment et l'angle $\theta$ qu'il forme avec l'horizontale sur l'image, comme le résume la figure 3. Tout point du segment obéira aux équations

$$(1) \quad \left[ \begin{cases} x = x_0 + u \dfrac{L}{2} \cos \theta \\ y = y_0 + u \dfrac{L}{2} \sin \theta \end{cases} \right]$$

avec u compris entre -1 et +1 et $\theta$ compris entre 0 et $\pi$.

Un cylindre sera appréhendé par ses contours ou limbes. Il s'agira de deux segments parallèles, sauf si l'on admet l'effet de la perspective. Un modèle convenable est résumé par la figure 4 et comprend cinq paramètres : les coordonnées $x_0$ et $y_0$ de l'isobarycentre du système formé par les deux segments, la longueur commune L des deux segments, l'angle $\theta$ formé par les deux segments avec l'horizontale et la distance d séparant les deux segments. Les coordonnées des points des deux segments sont données par les équations

$$(2) \quad \begin{cases} x = x_0 + u \dfrac{L}{2} \cos(\theta) + \dfrac{d}{2} \sin(\theta) \\ y = y_0 + u \dfrac{L}{2} \sin(\theta) - \dfrac{d}{2} \cos(\theta) \end{cases}$$

et

$$(3) \quad \begin{cases} x = x_0 + u \dfrac{L}{2} \cos(\theta) - \dfrac{d}{2} \sin(\theta) \\ y = y_0 + u \dfrac{L}{2} \sin(\theta) + \dfrac{d}{2} \cos(\theta) \end{cases},$$

avec u (paramètre de parcours) compris entre -1 et +1.

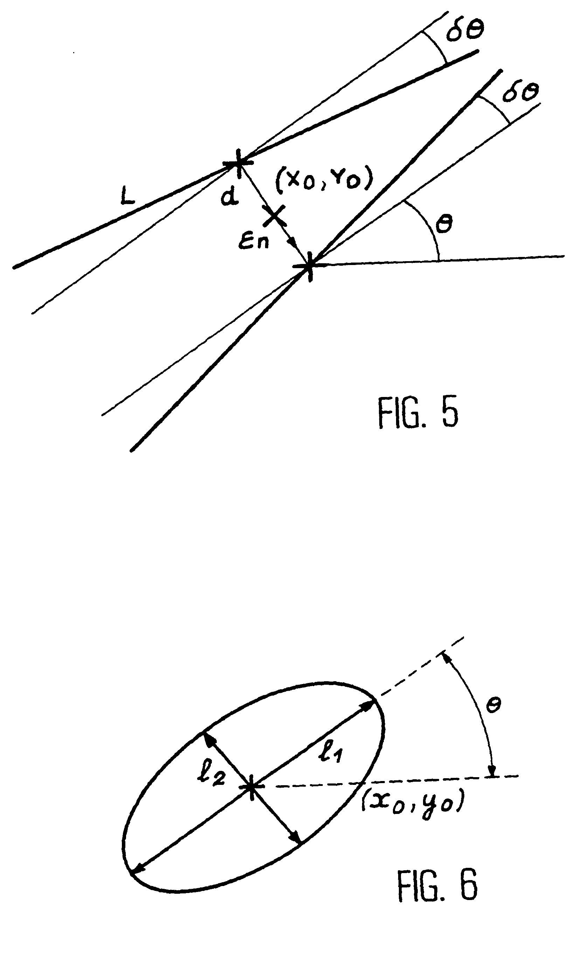

Mais si on veut tenir compte d'un effet de perspective, le modèle précédent peut être enrichi des paramètres $\delta\theta$ exprimant des déviations en sens opposés et convergent des deux segments, comme l'exprime la figure 5 ; les points sélectionnés par l'opérateur sont alors au nombre de 4. Les équations

$$(4) \quad \begin{cases} x = x_0 + u\, \dfrac{L}{2}\, \cos(\theta + \delta\theta) + \dfrac{d}{2}\, \sin(\theta) \\ y = y_0 + u\, \dfrac{L}{2}\, \sin(\theta + \delta\theta) - \dfrac{d}{2}\, \cos(\theta) \end{cases}$$

et

$$(5) \quad \begin{cases} x = x_0 + u\,\dfrac{L}{2}\, \cos(\theta - \delta\theta) - \dfrac{d}{2}\, \sin(\theta) \\ y = y_0 + u\,\dfrac{L}{2}\, \sin(\theta - \delta\theta) + \dfrac{d}{2}\, \cos(\theta) \end{cases}$$

remplaceront les équations (2) et (3).

La projection d'un cercle dans l'espace sur une image bidimensionnelle est une ellipse dont un paramétrage possible peut être lu sur la figure 6 : les paramètres sont les coordonnées $x_0$ et $y_0$ du centre, les longueurs $l_1$ et $l_2$ de grand et de petit axe et l'orientation $\theta$ du grand axe par rapport à l'horizontale. Les équations

$$(6) \quad \begin{cases} x = x_0 + l_1 \cos(\theta)\cos(u) - l_2 \sin(\theta)\sin(u) \\ y = y_0 + l_1 \sin(\theta)\cos(u) + l_2 \cos(\theta)\cos(u) \end{cases}$$

donnent les coordonnées des points de l'ellipse, où u est un paramètre d'abscisse curviligne compris entre 0 et $2\pi$.

Le procédé commence par une initialisation de la représentation de l'environnement, en général manuelle, où un opérateur examine une des images sur un écran d'ordinateur et repère des contours à modéliser. Après avoir choisi le type de contour adapté, il vise sur l'écran un nombre suffisant de points pour définir ce contour et permettre un premier calcul des paramètres.

Ces points sont figurés par des étoiles sur les figures 3 et 4 : il s'agit des extrémités du segment, et des extrémités d'un limbe de cylindre et d'un point de l'autre limbe. Une ellipse est définie par cinq points.

L'étape suivante est une adéquation du contour sélectionné par l'opérateur ou automatiquement à l'image grâce à une fonction de potentiel au moyen de calculs faits par le module de localisation 20. En général, l'amélioration d'un modèle sur une image est chiffrée par la diminution successive d'une fonction Pe dite de potentiel qui comprend plusieurs termes. Un seul terme d'énergie suffit ici dans la plupart des cas. L'image est traitée en calculant les différences de niveaux de gris numérisés de points voisins, pour associer à chacun des points de l'image une intensité de potentiel élevée si le point est dans une zone de teinte uniforme, et une intensité de potentiel faible s'il est dans une zone de transition ou de discontinuité de teinte. Si une image de potentiel était représentée, elle présenterait des zones foncées aux contours des objets et, en général, un fond clair ailleurs. La somme du potentiel d'un contour est calculée sur tous ses points, puis un algorithme d'analyse numérique par descente de gradient est mis en oeuvre pour calculer les variations du potentiel en fonction de la variation des paramètres du contour. Dans le cas présent, c'est plutôt la somme quadratique $\varepsilon$ du potentiel Pe le long du contour C qu'on cherche à minimiser selon l'équation

$$(7) \quad \varepsilon_{min}(a) = \left\| \sum_{x,y \in C} P_e(x(a), y(a)) \right\|^2 ,$$

où a est le vecteur des paramètres du modèle et x, y sont les abscisses et les ordonnées des points du contour. Outre sa rapidité de convergence, cet outil numérique présente l'avantage de fournir une évaluation de la matrice de covariance sur le modèle estimé, noté $\Delta_a$. Cette information sera exploitée par le module de reconstruction et de localisation tridimensionnelles.

On utilise une distance spéciale donnée par l'équation

$$(8) \quad f(d) = 1 - e^{\left(\frac{d^2}{2\sigma^2}\right)}$$

pour calculer le potentiel Pe des points de l'image. Cette distance spéciale possède les avantages d'être quadratique au voisinage de zéro, c'est-à-dire du contour, et d'être à peu près constante lorsque la distance euclidienne entre points de l'image d devient importante. σ est un coefficient fixe. Cette distance est comparable à un coefficient de pondération qui atténue l'influence des points éloignés dans le calcul du potentiel Pe.

Cependant, un terme de potentiel supplémentaire est utilisé en sus du terme Pe précédent pour les contours de cylindre. En effet, il est fréquent que ces éléments soient soumis à des variations d'éclairage qui y créent des bandes très réfléchissantes de spécularités vers lesquelles le modèle déformable pourrait converger en les confondant avec des contours. L'utilisation de ce terme supplémentaire prévient ce danger : il s'agit d'un terme de potentiel conventionnellement très élevé pour les points fortement éclairés ; le potentiel total ainsi modifié devient élevé autour des bandes réfléchissantes, ce qui repousse les contours modélisés vers les contours réels du cylindre.

Il faut encore signaler l'influence des aberrations géométriques introduites par les lentilles d'un objectif : une droite dans l'espace se projette en segment de courbe, plutôt qu'en segment rectiligne, sur l'image. Les modèles déformables opposés ici ne permettent pas d'approcher parfaitement de telles parties déformées, mais on peut utiliser un procédé de correction des aberrations géométriques pour appliquer le procédé de l'invention à des images rectifiées, obtenues sans distorsion. Ce procédé de correction est fait pour tous les points de l'image à la fois au préalable, et c'est l'image rectifiée qui est conservée dans la mémoire 12.

Les aberrations géométriques sont composées de deux termes, dont un terme de distorsion radiale qui déplace un point radialement par rapport au centre optique de l'image et s'exprime comme un polynôme d'équation

$$(9) \quad \delta_r(r) = K_1 r^3 + K_2 r^5 + K_3 r^7$$

en fonction de la distance radiale $r = \sqrt{x^2 + y^2}$ ; et un terme de distorsion tangentielle qui intègre une composante tangentielle et une composante radiale conformément aux équations

$$(10) \quad \begin{cases} \delta_T(x) = P_1\left(r^2 + 2x\right) + 2P_2 xy \\ \delta_T(y) = P_2\left(r^2 + 2y\right) + 2P_1 xy \end{cases}.$$

Les coefficients $K_1$, $K_2$, $K_3$ et $P_1$ et $P_2$ sont des coefficients de distorsion estimés pendant l'étalonnage de la caméra.

La distorsion radiale est estimée par un calcul préliminaire d'une table d'aberration en fonction de la distance radiale. Cette table fait correspondre, pour chaque distance radiale $r_D$ du centre d'une image d'étalonnage distordue, la distance correspondante $r_{ND}$ d'un même endroit dans l'image non distordue. L'écartement entre les valeurs successives des distances $r_D$ logées dans la table est choisi pour que la précision minimale Δ entre des valeurs successives de la distance corrigée $r_{ND}$ soit respectée. Ce procédé permet d'obtenir une précision qui peut atteindre un dixième du pas entre deux points successifs de l'image.

On ne prévoit pas de procéder de la même façon pour tenir compte de la distorsion tangentielle, car les tables donnant des corrections en fonction des coordonnées x et y devraient concerner tous les points de l'image et occuperaient une place excessive en mémoire. C'est pourquoi, s'il faut tenir compte de ces distorsions tangentielles, il est conseillé d'utiliser un algorithme de recherche de racine d'équation fondée sur les équations (10), tel que l'algorithme de Powell bien connu dans l'art.

On passe maintenant à la description du deuxième module 21 du système d'exploitation, qui est un module de reconstruction et de localisation qui exploite les positions des contours d'objets détectés précédemment sur les images pour estimer la position de ces objets dans l'environnement, c'est-à-dire construire la représentation tridimensionnelle de celui-ci, tout en calculant la position du capteur 7 d'image par une étape de localisation. Le procédé est récurrent, c'est-à-dire que les images sont exploitées successivement, la représentation de l'environnement étant à chaque fois complétée et corrigée pour la rendre plus précise. Il s'agit d'une application du filtre de Kalman. On décrit ici l'utilisation d'un capteur 7 stéréoscopique à deux caméras, mais le procédé serait applicable à un capteur à caméra unique : la reconstruction et la localisation ne pourraient être appréciées qu'à un facteur d'échelle près, qu'on pourrait donner en injectant une information supplémentaire dans le système, telle qu'une distance entre deux points ou le rayon d'un cylindre.

Nous donnons ci-dessus les formules qui lient, pour une caméra d'indice i du capteur ayant pris une image à l'instant k, le vecteur $x_k$ des paramètres de l'objet détecté dans un repère absolu et le vecteur $z_k^i$ de ses coordonnées d'observations dans cette image. La caméra aura sa position notée par une matrice de rotation $R_k^i$ et un vecteur de translation $t_k^i$ dans le repère absolu. Les formules de passage sont notées par la lettre h.

Dans le cas d'un point, les équations

$$(11) \quad h_P^i\left(x_k, z_k^i\right) = \begin{pmatrix} u \ - \ f \ \dfrac{x_k}{z_k} \\ v \ - \ f \ \dfrac{y_k}{z_k} \end{pmatrix} = 0$$

où $\left(x_k, y_k, z_k\right)^t = R_k^i\left(x, y, z\right)^t + t_k^i$ sont respectées, avec $x_k = (x, y, z)^t$, $z_k^i = (u, v)$.

Dans le cas d'une droite, $x_k$ et $z_k^i$ sont définis par les vecteurs (13) $x_k = (x, y, z, \beta, \varphi)^t$, $z_k^i = (u, v, \theta)$, où $\beta$ et $\varphi$ sont les coordonnées sphériques du vecteur directeur de la droite et $\theta$ l'angle que sa projection fait sur l'image ; les formules

$$(14) \quad h_d^i\left(x_k, z_k^i\right) = \begin{pmatrix} \left(m_I - m_P\right) \times v_I \\ v_I \cdot \left(m_k \times v_k\right) \end{pmatrix} = 0$$

où x est le produit vectoriel, donnent les conditions à satisfaire, où $(m_k, v_k)$ sont les paramètres de la droite (les coordonnées d'un de ses points $m_k$ et de son vecteur directeur) conformément aux équations

$$(15) \quad m_k \ = \ R_k^i m \ + \ t_k^i, \ v_k \ = \ R_k^i v,$$

$m_p$ représente les coordonnées de la projection du point $m_k$ sur l'image, $m_I$ est le milieu du segment détecté sur l'image et $v_I$ est le vecteur directeur du segment, conformément à la figure 7, et $m_I$ et $v_I$ sont déduits de $Z_k$.

Un cylindre infini est défini par le vecteur

$$(16) \quad x_k = (x, y, z, \beta, \varphi, r)^t,$$

où x, y et z sont les coordonnées (notées m) d'un point de son axe, $\beta$ et $\varphi$ sont les coordonnées sphériques (notées v) du vecteur directeur de son axe, et r est son rayon. Les équations

$$(17) \quad m_k \ = \ R_k^i m \ + \ t_k^i \ \text{et} \ v_k \ = \ R_k^i v$$

expriment la position de l'axe du cylindre dans le repère de la caméra i à l'instant k. On calcule en outre $(m_1, v_1)$ et $(m_2,$

$v_2$), les coordonnées de ses limbes, et $m_{P1}$ et $m_{P2}$ les projections de points $m_1$ et $m_2$ des limbes sur l'image. A partir des paramètres mesurés sur l'image

$$(18) \quad (u, v, \theta, \delta\theta, d),$$

on déduit le vecteur d'observation $z_k=(u_1, v_1, \theta_1, u_2, v_2, \theta_2)$ correspondant aux points milieux et aux orientations des deux limbes observés et on obtient l'équation de mesure

$$(19) \quad k_{dy}^i(x_k, z_k^i) = \begin{pmatrix} (m_{I1}-m_P)xv_{I1} \\ v_{I1}.(m_I xv_I) \\ (m_{I2}-m_P)xv_{I2} \\ v_{I2}.(m_{I2}xv_2) \end{pmatrix} = 0 \; .$$

La figure 8 représente ces paramètres. Conformément au cas de la droite, $V_{I1}$ et $m_{I1}$, $v_{I2}$ et $m_{I2}$ sont déduits de $z_k$.
Quant au cercle, il est défini par un vecteur d'état conforme à la formule

$$(20) \quad x_k = (x, y, z, \beta, \varphi, r)^t,$$

où x, y et z désignent les coordonnées de son centre, $\beta$ et $\varphi$ les coordonnées sphériques du vecteur directeur de sa normale et r son rayon. De plus, les formules

$$(21) \quad m_k = R_k^i m + t_k^i \quad et \quad v_k = R_k^i v$$

s'appliquent. Si les coordonnées d'observation sont représentées par la fonction

$$(22) \quad z_k^i = (u, v, l_1, l_2, \theta),$$

les équations

$$(23) \quad h_c^i(x_k, z_k^i) = \begin{pmatrix} q_0 - ((b^2(x_k^2 + y_k^2 + z_k^2 - r^2) + 1 - 2by_k)/Q) \\ q_1 - ((2ab(x_k^2 + y_k^2 + z_k^2 - r^2 - 2bx_k - 2ay_k)/Q)) \\ q_2 - ((2ad(x_k^2 + y_k^2 + z_k^2 - r^2) - 2cx_k - 2az_k)/Q) \\ q_3 - ((2bd(x_k^2 + y_k^2 + z_k^2 - r^2) - 2cy_k - 2bz_k)/Q) \\ q_4 - ((c^2(x_k^2 + y_k^2 + z_k^2 - r^2) + 1 - 2cz_k)/Q) \end{pmatrix} = 0$$

avec $Q = a^2(x_k^2 + y_k^2 + z_k^2 - r^2) + 1 - 2bx_k$ expriment le passage entre le vecteur d'état et les observations, où $q_0$, ..., $q_4$ sont issus d'une conversion des paramètres (22) pour obtenir une représentation de l'ellipse sous forme implicite telle que $u^2+q_0 v^2+q_1 uv+q_2 u+q_3 v+q_4=0$.
Nous passons maintenant à la description du procédé de reconstruction dans le cas particulier d'un capteur formé de deux caméras fixes l'une par rapport à l'autre, notées par leurs indices l et r et prenant simultanément une image. Pour un point, le vecteur d'observation global peut s'exprimer par

$$(24) \quad z_k = (u^l, v^l, u^r, v^r, \chi_k, \beta_k, \alpha_k, t_{xk}, t_{yk}, t_{zk})$$

où $u^l$, $v^l$, $u^r$ et $v^r$ sont les coordonnées du point sur les deux images et les autres paramètres sont les vecteurs d'orientation et de translation du capteur dans le repère absolu. La fonction d'observation du point est alors donnée par l'équation

$$(25) \quad h_p(x_k, z_k) = \begin{pmatrix} h_p^l\left(x_k, z_k^l\right) \\ h_p^r\left(x_k, z_k^r\right) \end{pmatrix} = 0,$$

dont la solution (dont on aura remarqué qu'il s'agit de duplication de l'équation (11) pour les deux caméras) donne une évaluation du vecteur d'état $x_k$ du point, composé des coordonnées x, y et z dans le repère absolu.

La localisation d'une droite est conditionnée par l'obtention d'un vecteur d'observation

$$(26) \quad z_k = (u^l, v^l, \theta^l, u^r, v^r, \theta^r, \chi_k, \beta_k, \alpha_k, t_{xk}, t_{yk}, t_{zk})^t$$

et la résolution des équations

$$(27) \quad h_d(x_k, z_k) = \begin{pmatrix} h_d^l\left(x_k, z_k^l\right) \\ h_d^r\left(x_k, z_k^r\right) \end{pmatrix} = 0,$$

de façon analogue ; rappelons que les paramètres $\theta$ sont les angles des projections de la droite sur les images 1 et r par rapport à l'horizontale. Il faut toutefois noter que, comme on observe des segments de droite plutôt que des droites elles-même, le vecteur d'état d'une droite est donné par la formule

$$(28) \quad x_k = (a, b, p, q)^t,$$

plutôt que par les coordonnées d'un point de la droite et le vecteur directeur de cette droite. A chaque acquisition, la droite estimée par les paramètres du vecteur d'état a, b, p et q est exprimée sous forme d'une droite finie de paramètres x, y, z, $\beta$, $\varphi$ et 1 où la longueur du segment est désignée par 1 et le milieu de ce segment par les coordonnées x, y et z. Ces dernières coordonnées sont évaluées par une reprojection dans l'image. La définition des paramètres a, b, p, q peut être donnée ci-dessous :

- la droite a un vecteur directeur (1, a, b,) et un vecteur de position (0, p, q) sauf si elle est perpendiculaire à l'axe $O_x$ ;
- elle peut être définie par le vecteur directeur (a, 1, b) et un vecteur de position (p, 0, q) sauf si elle est perpendiculaire à l'axe Oy ;
- et par un vecteur directeur (n, b, 1) et un vecteur de position (p, q, 0) sauf si elle est perpendiculaire à l'axe $O_z$. Une convention de préférence permet de définir une priorité quand plusieurs de ces représentations sont possibles.

En ce qui concerne le cylindre, il est encore défini dans la représentation par des paramètres a,b,p, et q de son axe, et par son rayon, selon la formule

$$(29) \quad x_k = (a, b, p, q, r)^t.$$

Le vecteur d'observation est défini par la formule

$$(30) \quad z_k = \left(u_1^l, v_1^l, \theta_1^l, u_2^l, v_2^l, \theta_2^l, u_1^r, v_1^r, \theta_1^r, u_2^r, v_2^r, \theta_2^r \chi_k, \beta_k \alpha_k, t_{x_k}, t_{y_k}, t_{z_k}\right)^t.$$

Le système

$$(31) \quad h_{cy}(x_k, z_k) = \begin{pmatrix} h_{cy}^l(x_k, z_k^l) \\ h_{cy}^r(x_k, z_k^r) \end{pmatrix} = 0$$

doit être résolu. Enfin, le cercle à vecteur d'état défini par la formule

$$(32) \quad x_k = (x, y, z, \beta, \varphi, r)^t,$$

le vecteur d'observation défini par la formule

$$(33) \quad z_k = \left(u^l, v^l, 1_1^l, 1_2^l, \theta^l, u^r, v^r, 1_1^r, 1_2^r, \theta^r, \alpha_k, \beta_k, \chi_k, t_{x_k}, t_{y_k}, t_{z_k}\right)^t,$$

et le système

$$(34) \quad h_{cy}(x_k, z_k) = \begin{pmatrix} h_{cy}^l(x_k, z_k^l) \\ h_{cy}^r(x_k, z_k^r) \end{pmatrix} = 0$$

doit être résolu.

A chaque nouvelle acquisition, l'estimation de la position de l'objet est affinée. Quand un objet apparaît pour la première fois dans un couple d'images, cette estimation est initialisée par une reconstruction préliminaire par triangulation. Des méthodes ont été proposées dans l'art. Une initialisation convenable permet de faire converger l'estimation de position de l'objet rapidement à chaque nouvelle image.

La reconstruction de l'environnement tridimensionnel implique une localisation du capteur, dont la position n'est en général pas connue, ou n'est connue qu'avec une précision insuffisante. A chaque nouvelle acquisition, on utilise les points déjà reconstruits dans l'environnement et leur vecteur d'observation pour effectuer une pré-localisation du capteur en recherchant

$$(36) \quad \min(\chi_k, \beta_k, \alpha_k, t_x, t_y, t_z) = \sum_j \left\| h_p^j(x_k, z_k^j) \right\|^2,$$

c'est-à-dire les valeurs $\chi_k$, $\beta_k$, $\alpha k$, $t_{xk}$, $t_{yk}$, $t_{zk}$ qui donnent la meilleure concordance entre la représentation de l'environnement et son image sur les caméras (h proche de 0), pour tous les points j du modèle. Ensuite, on résout de manière récurrente les équations

$$(37) \quad h_p(x_k, z_k) = 0, \quad h_d(x_k, z_k) = 0, \quad h_{cy}(x_k, z_k) = 0,$$

$$\text{ou } h_c(x_k, z_k) = 0$$

(une par objet déjà reconstitué, selon la catégorie de l'objet), où les vecteurs d'observations $z_k$ sont donnés par la formule

$$(38) \quad z_k = (u^l, v^l, u^r, v^r, x, y, z)^t,$$

$$z_k = (u^l, v^l, \theta^l, u^r, v^r, \theta^r, x, y, z, \beta, \varphi)^t,$$

$$z_k = (u_1^l, v_1^l, \theta_1^l, u_2^l, v_2^l, \theta_2^l, u_1^r, v_1^r, \theta_1^r, u_2^r, v_2^r, \theta_2^r, x, y, z, \beta, \varphi, r)^t,$$

ou

$$z_k = (u^l, v^l, l_1^l, l_2^l, \theta^l, u^r, v^r, l_1^r, l_2^r, \theta^r, x, y, z, \beta, \varphi, r)^t$$

appropriée : il s'agit d'une autre application du filtre de Kalman où le vecteur d'état estimé est dans ce cas ($\chi_k$, $\beta_k$, $\alpha_k$, $t_{xk}$, $t_{yk}$, $t_{zk}$). Le module 22 effectue cette localisation.

Le module d'identification 23 du système permet d'identifier automatiquement au moins une partie des contours qui font l'objet des calculs précédents, à chaque fois qu'une image est prise. On propose d'agir de la façon suivante :

- sélectionner une image précédente $k_0$, de préférence proche de l'image actuelle k en ce qui concerne les positions et orientations de prise de vue ;
- sélectionner des points d'intérêt $I_0$ sur cette image précédente $k_0$, ce qui peut être fait automatiquement, les points d'intérêt ayant comme propriété générale de présenter un gradient important de luminosité à leur voisinage, peu sensible en général aux changements de conditions de prise de vue (éclairage, zoom, exposition de la vue). Un point caractéristique déjà identifié à une image $k_0$ sera donc le plus souvent identifié de nouveau sur une image suivante k, sauf s'il est alors caché par un autre objet de l'environnement ;
- quand les points d'intérêt $I_0$ et $I_k$ des deux images ont été trouvés, ils sont mis en correspondance d'une image à l'autre ; on peut utiliser pour cela l'information de luminance au voisinage de chacun d'eux, qui est susceptible de les caractériser au mieux ; elle est codée sous forme vectorielle en utilisant différents filtres. Le module recherche, pour chaque point d'intérêt $I_k$ de la nouvelle image k, celui des points d'intérêt $I_0$ de l'image précédente $k_0$ qui lui est le plus similaire en calculant un score de corrélation ou une distance vectorielle (voir par exemple les travaux de C. Schmid « Appariement d'images par invariants locaux de niveaux de gris », Thèse de doctorat INPG, 1996) ;
- quand les correspondances entre couples de points d'intérêt, supposés provenir des projections respectives sur les deux images d'un même point de l'environnement, ont été déterminées, une matrice de correspondance entre les deux images a ainsi été obtenue. Il devient alors possible de projeter le modèle tridimensionnel estimé auparavant sur l'image actuelle au moyen de cette matrice. Les contours ainsi obtenus servent d'estimation préliminaire de contours d'objets pour la nouvelle image k, et ils sont utilisés en appliquant sur eux le procédé explicité plus haut du module 20 en utilisant des modèles déformables. L'opérateur n'a donc pas à recommencer complètement la sélection des contours sur la nouvelle image k. Il peut évidemment rectifier des contours qui apparaîtraient comme incorrects ou éliminer des contours occultés par d'autres objets de l'environnement. Comme le programme est conçu pour éliminer lui-même les contours occultés par des objets déjà incorporés au modèle, l'opérateur ne devrait éliminer que les contours occultés pour des objets qui n'ont pas encore été identifiés. Il doit cependant introduire les contours apparaissant pour la première fois sur l'image k.

Un dernier module est un calcul tridimensionnel en bloc. Il est accompli par le module 24 quand toutes les images de l'environnement ont été exploitées de la manière qu'on a décrite et qu'une représentation de l'environnement a été complétée. Le calcul est mené de la façon suivante :

- A partir des paramètres $R_k^i$ et $t_k^i$ a priori pour chaque image k, les projections des contours de la représentation sur les plans d'image de la caméra sont calculées ;

- les écarts entre les positions des contours projetés et les positions des mêmes contours évalués auparavant sur les mêmes images sont calculés ;
- les positions des contours dans la représentation sont réévaluées afin de minimiser les écarts.

On procède en utilisant une méthode des moindres carrés en minimisant une erreur globale. Un vecteur x= $(x_{G1} ... x_{Gn} x_{M1} ... x_{Mp})^T$ où les $x_G$ regroupent les paramètres de tous les n objets de la représentation et les $x_M$ regroupent les paramètres des p prises de vue $(\alpha, \beta, \chi, t_x, t_y, t_z)^T$ peut être défini, ainsi qu'un vecteur z de mesure qui regroupe l'ensemble des observations faites pour chaque objet et pour chaque image. L'ajustement effectué par le module 24 revient à la minimisation d'une fonctionnelle d'erreur F(x,z,a) où a comprend des informations connues sur les moyens de prise d'image (par exemple leurs paramètres intrinsèques, centre optique, focale, coefficients d'échelle et de distorsion), ou sur la représentation (par exemple des paramètres du vecteur x qui sont supposés bien déterminés ou connus). Des pondérations des différents paramètres peuvent être introduites. Ce module 24 permet donc d'évaluer les incertitudes de la représentation de l'environnement et de les réduire en modifiant les paramètres estimés de prise de vue.

Il est possible de corriger certains paramètres ou de les bloquer. Les paramètres utilisés sont u et v pour le point, θ et d (distance à l'origine du référentiel d'image) pour la droite et chaque limbe de cylindre. De plus, on utilise encore les coordonnées u et v des extrémités des segments de droite et de cylindre.

Le calcul en bloc est utilisable également pour effectuer la mesure de la position et de l'orientation d'un ou plusieurs objets au moyen d'une seule image et d'une caméra. Il sera nécessaire pour cela de disposer d'informations complémentaires sur les objets : les caractéristiques géométriques de chaque objet doivent être connues et injectées dans le calcul en bloc. La mesure des projections dans une seule image de ces dites caractéristiques est suffisante alors pour déterminer la position et l'orientation de l'objet. Il sera nécessaire de veiller à disposer de caractéristiques en nombre suffisant pour évaluer tous les paramètres de position et d'orientation.

## Revendications

1. Procédé de mesurage d'objet tridimensionnel d'un environnement tridimensionnel, comprenant les étapes de:

   - prendre au moins une image de l'environnement par au moins une caméra;
   - détecter les discontinuités de l'aspect de l'image ;
   - associer les discontinuités à des contours géométriques, les contours ayant des positions et des formes sur l'image qui sont définies par des paramètres incluant des nombres;
   - ajuster les contours géométriques aux discontinuités en faisant varier les paramètres, **caracterisé par** les étapes de :

     - associer numériquement les contours géométriques à des objets géométriques de l'environnement tridimensionnel, une position tridimensionnelle et une forme volumique des objets géométriques dans l'environnement tridimensionnel étant définies par des paramètres tridimensionnels incluant des nombres;
     - estimer les positions tridimensionnelles et les formes volumiques des objets géométriques dans l'environnement tridimensionnel en calculant les projections géométriques des objets géométriques sur ladite au moins une image d'après un ajustement entre les projections et les contours géométriques;
     - et créer une représentation de l'environnement tridimensionnel, cette représentation comprenant des objets géométriques, selon les paramètres définissant les positions et les formes des objets géométriques.

2. Procédé selon la revendication 1, **caractérisé en ce que** les contours géométriques comprennent le point, la ligne droite et les objets comprennent le cercle, le cylindre, la droite et le point.

3. Procédé selon la revendication 2, **caractérisé en ce que** les paramètres comprennent des coordonnées cartésiennes planes, des angles et des longueurs.

4. Procédé selon l'une quelconque des revendications 1, 2 et 3, **caractérisé en ce que** ladite au moins une image est convertie en une image d'une fonction de potentiel (Pe) calculée sur les points de l'image, la fonction de potentiel donnant des valeurs extrêmes aux discontinuités.

5. Procédé selon la revendication 4, **caractérisé en ce que** la fonction de potentiel comprend un terme tenant compte de zones de très faible intensité de niveau de gris de l'image.

6. Procédé selon la revendication 1, **caractérisé en ce que** la représentation comprend une position de l'au moins une caméra (8, 9).

**7.** Procédé selon la revendication 6, **caractérisé en ce que** les projections géométriques (z) sont déterminées au moyen de relations (h) utilisant des positions estimées (x) des objets géométriques dans la représentation et des paramètres $\left(R'_k, t'_k\right)$ de position de la caméra.

**8.** Procédé selon la revendication 1, **caractérisé en ce que** la représentation comprend des estimations initiales sur les positions des objets géométriques, qui sont spécifiées manuellement ou à travers un, fichier informatique de description, et la représentation est créée en ajustant progressivement les estimations de sorte que l'ajustement entre les projections des objets géométriques et les contours géométriques de l'au moins une image est améliorée.

**9.** Procédé selon la revendication 1, **caractérisé en ce qu'**une pluralité des images est prise successivement par des acquisitions de nouvelles images, et des estimations de position des objets de la représentation sont affinées en reprojetant les objets géométriques de la représentation sur chaque nouvelle image.

**10.** Procédé selon la revendication 9, **caractérisé en ce qu'**il comporte, pour chaque nouvelle image, une estimation de localisation de la caméra correspondant à la meilleure concordance entre la représentation de l'environnement et ladite nouvelle image, et **en ce que** la représentation est affinée en utilisant ladite estimation de localisation.

**11.** Procédé selon la revendication 9, **caractérisé en ce que** les objets géométriques sont projetés sur chaque nouvelle image avant de détecter les discontinuités d'aspect de ladite nouvelle image, de manière à donner des contours qui servent d'estimations préliminaires auxdites discontinuités d'aspect de la nouvelle image.

**12.** Procédé selon la revendication 11, **caractérisé en ce que** lés estimations de la position des objets dans la représentation sont affinées en ajustant les projections des objets aux discontinuités d'aspect de la nouvelle image, sans associer lesdits discontinuités à des contours géométriques.

**13.** Procédé selon l'une quelconque des revendications précédentes, **caractérisé en ce qu'**il comprend une étape finale d'ajustement de la représentation de l'environnement en calculant, puis en minimisant une fonctionnelle d'erreur (F), exprimant des écarts entre des projections des objets de la représentation sur les images et les contours géométriques sur lesdites images, en fonction de paramètres spécifiques aux caméras ($x_M$) et des paramètres des objets ($x_G$), en faisant varier certains au moins desdits paramètres (x).

**Claims**

**1.** Process for measuring three-dimensional objects of a three-dimensional environment, comprising the steps of:

   - taking at least one image of the environment by at least one camera;
   - detecting aspect discontinuities of the image;
   - associating the discontinuities to geometric outlines, the outlines having positions and shapes on the image which are defined by parameters including numbers;
   - adjusting the geometric outlines to the discontinuities by varying the parameters, **characterised by** the steps of:
   - numerically associating the geometric outlines to geometric objects of the three-dimensional environment, a three-dimensional position and a volumic shape of the geometric objects in the three-dimensional environment being defined by three-dimensional parameters including numbers;
   - estimating the three-dimensional positions and the volumic shapes of the geometric objects in the three-dimensional environment by computing the geometric projections of the geometric objects on said at least one image based on an adjustment between the projections and the geometric outlines;
   - and creating a representation of the three-dimensional object, said representation comprising geometric objects, based on the parameters defining the positions and the shapes of the geometric objects.

**2.** The process according to claim 1, **characterised in that** the geometric outlines comprise dot, right line, and the objects comprise circle, cylinder, line and dot.

**3.** The process according to claim 2, **characterised in that** the parameters comprise planar Cartesian coordinates, angles and lengths.

4. The process according to any one of claims 1, 2 and 3, **characterised in that** said at least one image is converted into an image of a potential function (Pe) computed on points of the image, the potential function giving extreme values at the discontinuities.

5. The process according to claim 4, **characterised in that** the potential function comprises a term taking account of zones of a very weak intensity of grey level of the image.

6. The process according to claim 1, **characterised in that** the representation comprises a position of the at least one camera (8, 9).

7. The process according to claim 6, **characterised in that** the geometric projections (z) are determined with relationships (h) using estimated positions (x) of the geometric objects in the representation and position parameters $(R'_k, t'_k)$ of the camera.

8. The process according to claim 1, **characterised in that** the representation comprises initial estimations of the positions of the geometric objects, which are specified manually or with a description computer file, and the representation is created by progressively adjusting the estimations so that the adjustment between the projection of the geometric objects and the geometric outlines of said at least one image is improved.

9. The process according to claim 1, **characterised in that** a plurality of the images is taken successively by acquisitions of new images, and estimations of positions of the objects of the representation are made more accurate in projecting the geometric objects of the representation on each new image again.

10. The process according to claim 9, **characterised in that** it comprises, for each new image, a localization estimation of the camera, corresponding to the best fit between the representation of the environment and said new image, and **in that** the representation is made more accurate in using said localization estimation.

11. The process according to claim 9, **characterised in that** the geometric objects are projected on each new image before detecting the aspect discontinuities of said new image, whereby outlines are yielded that are used as preliminary estimations for said aspect discontinuities of the new image.

12. The process according to claim 11, **characterised in that** the estimations of the position of the objects in the representations are made more accurate in fitting the projections of the objects to the aspect discontinuities of the new image, without associating said discontinuities to geometric outlines.

13. The process according to any one of the previous claims, **characterised in that** it comprises a final step of fitting the representation of the environment, by computing then minimizing a mistake functional (F) that expresses deviations between projections of the objects of the representation on the images and the geometric outlines on said images, based on parameters specific to the camera $(x_n)$ and parameters of the objects $(x_c)$, by varying at least some of said parameters (x).

**Patentansprüche**

1. Verfahren zum Messen eines dreidimensionalen Objekts einer dreidimensionalen Umgebung, die folgenden Schritte umfassend:

    - Aufnehmen wenigstens eines Bilds der Umgebung durch wenigstens eine Kamera;
    - Detektieren der Erscheinungs-Diskontinuitäten des Bilds;
    - Assoziieren der Diskontinuitäten mit geometrischen Konturen, wobei die Konturen auf dem Bild Positionen und Formen haben, die definiert werden durch Zahlen umfassende Parameter;
    - Angleichen der geometrischen Konturen oder Diskontinuitäten durch Variieren der Parameter, **gekennzeichnet durch** die Schritte:
    - numerisches Assoziieren der geometrischen Strukturen mit geometrischen Objekten der dreidimensionalen Umgebung, wobei eine dreidimensionale Position und eine Volumenform der geometrischen Objekte in der dreidimensionalen Umgebung definiert werden durch dreidimensionale, Zahlen umfassende Parameter;

- Bewerten der dreidimensionalen Positionen und der Volumenformen der geometrischen Objekte in der dreidimensionalen Umgebung, indem man die geometrischen Projektionen der geometrischen Objekte auf das genannte wenigstens eine Bild gemäß einer Angleichung zwischen den Projektionen und den geometrischen Konturen berechnet;

- und Erzeugen einer Darstellung der dreidimensionalen Umgebung, wobei diese Darstellung geometrische Objekte gemäß den die Positionen und die Formen der geometrischen Objekte definierenden Parametern umfasst.

2. Verfahren nach Anspruch 1, **dadurch gekennzeichnet, dass** die geometrischen Konturen den Punkt, die gerade Linie und die den Kreis , den Zylinder, die Gerade und den Punkt umfassenden Objekte umfassen.

3. Verfahren nach Anspruch 2, **dadurch gekennzeichnet, dass** die Parameter ebene kartesische Koordinaten, Winkel und Längen umfassen.

4. Verfahren nach einem der Ansprüche 1, 2 und 3, **dadurch gekennzeichnet, dass** das genannte eine Bild konvertiert wird in ein Bild einer Potentialfunktion (Pe), berechnet nach den Bildpunkte, wobei die Potentialfunktion den Diskontinuitäten Extremwerte erteilt.

5. Verfahren nach Anspruch 4, **dadurch gekennzeichnet, dass** die Potentialfunktion einen Term umfasst, der Bildzonen mit sehr niedrigem Graupegel berücksichtigt.

6. Verfahren nach Anspruch 1, **dadurch gekennzeichnet, dass** die Darstellung eine Position von wenigstens einer Kamera (8, 9) umfasst.

7. Verfahren nach Anspruch 6, **dadurch gekennzeichnet, dass** die geometrischen Projektionen (z) mit Hilfe von Relationen (h) bestimmt werden, die bewertete Positionen der geometrischen Positionen in der Darstellung und Positionsparameter $\left( R_k^i, t_k^i \right)$ der Kamera verwenden.

8. Verfahren nach Anspruch 1, **dadurch gekennzeichnet, dass** die Darstellung Anfangsbewertungen bezüglich der Positionen der geometrischen Objekte umfasst, die manuell oder durch eine Informatik-Beschreibungsdatei spezifiziert werden, und die Darstellung erzeugt wird, indem die Bewertungen progressiv angeglichen werden, so dass die Angleichung zwischen den Projektionen der geometrischen Objekte und den geometrischen Konturen des wenigstens einen Bildes verbessert wird.

9. Verfahren nach Anspruch 1, **dadurch gekennzeichnet, dass** eine Vielzahl der Bilder sukzessive durch Erfassungen neuer Bilder aufgenommen wird und Positionsbewertungen der Objekte der Darstellung verfeinert werden, indem die geometrischen Objekte von der Darstellung wieder auf jedes neue Bild projiziert werden.

10. Verfahren nach Anspruch 9, **dadurch gekennzeichnet, dass** es für jedes neue Bild eine Lokalisierungsbewertung der entsprechenden Kamera mit der besten Übereinstimmung zwischen der Darstellung der Umgebung und dem genannten neuen Bild umfasst, und **dadurch**, dass die Darstellung verfeinert wird, indem die genannte Lokalisierungsbewertung verwender wird.

11. Verfahren nach Anspruch 9, **dadurch gekennzeichnet, dass**, bevor die Erscheinungs-Diskontinuitäten des genannten neuen Bilds detektiert werden, die geometrischen Objekte auf jedes neue Bild projiziert werden, um Konturen zu liefern, die für die genannten Erscheinungs-Diskontinuitäten des neuen Bilds als vorbereitende Bewertungen dienen.

12. Verfahren nach Anspruch 11, **dadurch gekennzeichnet, dass** die Bewertungen der Position der Objekte in der Darstellung verfeinert werden, indem die Projektionen der Objekte den Erscheinungs-Diskontinuitäten des neuen Bildes angeglichen werden, ohne die genannten Diskontinuitäten mit geometrischen Konturen zu assoziieren.

13. Verfahren nach einem der vorhergehenden Ansprüche, **dadurch gekennzeichnet, dass** es einen finalen Angleichungsschritt der Darstellung der Umgebung umfasst, wobei ein Funktionsfehler (F) berechnet und dann minimalisiert wird, der Abstände zwischen Projektionen der Objekte der Darstellung auf die Bilder und den geometrischen Konturen auf diesen Bildern ausdrückt, in Abhängigkeit von spezifischen Kamera-Parametern ($x_M$) und Objekte-Parametern ($x_G$), indem man wenigstens einige der genannten Parameter (x) variiert.

FIG. 1 A

FIG.1B

FIG. 2

FIG. 3

FIG. 4

FIG. 5

FIG. 6

FIG. 7

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5537494 A

**Littérature non-brevet citée dans la description**

- **Viala ; Chevillot ; Guérin ; Lavest.** Mise en oeuvre d'un procédé d'étalonnage précis de caméra CCD. *Reconnaissance des formes et Intelligence Artificielle,* 20 Janvier 1998
- Part-Based 3D Descriptions of Complex Objects from a Single Image. *IEEE Transactions on Pattern Analysis and Machine Intelligence,* Septembre 1999, vol. 21 (9), 835-848

- **Kass ; Witkin ; Terzopoulos.** Snake : Active contour models. *International Journal of Computer Vision,* Janvier 1988, vol. 1 (4), 321-331
- **C. Schmid.** Appariement d'images par invariants locaux de niveaux de gris. *Thèse de doctorat INPG,* 1996